# EUROPEAN PATENT APPLICATION

(11) **EP 4 459 220 A1**
(43) Date of publication of application: **06.11.2024**
(21) Application number: 24170415.4
(22) Date of filing: 16.04.2024
(51) Int. Cl.: F42B 7/08, C08L 3/02

(54) **WAD AND CARTRIDGE FOR SHOTGUNS**

(30) Priority: 05.05.2023 IT 202300008064
(71) Applicant: By Fiore di Mannarino Maria Teresa, 20815 Cogliate (MB) (IT)
(72) Inventor: MANNARINO, Maria Teresa, 20815 COGLIATE (MB) (IT)
(74) Representative: Riccardi, Sergio

(57) **Abstract**

A wad for shotgun cartridge and/or a cartridge for shotguns, and/or an outer envelope of said cartridge and/or a wad base for said cartridge, and/or a dop of said cartridge and/or case, made of an anhydrous polymeric material comprising starch in a quantity by weight between 35% and 65% and PVA in a quantity by weight between 12% and 20%, pea fibres and the polymeric material consequently being edible and at least partially vegetal.

## Description

The present invention relates to a wad for cartridges of shotguns and a cartridge of the kind recited in the preamble of the first claim.

Wads for projectiles of shotguns are presently known.

They are elements arranged inside the projectile case. Their main object is to make a provisional seal between case and barrel of the shotgun, preventing gas escape on firing.

Another object of the wad, deforming and expanding inside the shotgun barrel on firing, is to clean the inner surface of the barrel and to make a protection barrier for the next inserted projectile.

In the shotguns the wad may also comprise a semiflexible container having the shape of a cup provided to contain several shots, or contained in the same projectile. This configuration reduces the chaotic collision of the shots on the barrel wall and between each other, providing more coherent inner ballistics.

The wads were traditionally made of a felt material, for instance a wool felt or horsehair.

Modern wads are instead made of polymeric materials such as polyethylene and have special configurations.

The abovementioned prior art has some important drawbacks.

More particularly, the wads are expelled from the shotgun at each shot and are dispersed into the environment. More particularly, the wads of hunting materials are dispersed in the hunting environments, such as woods and the like. Consequently, these wads cause pollution of this environment.

The document EP 2965037 B1 relates to wads for shotgun projectiles made of biodegradable material, only partially solving the problem.

Indeed, although they are biodegradable, these wads show long times of environmental disposal and moreover their mechanical responses are not always reasonable.

In the abovementioned situation, the basic technical problem of the present invention is to provide a wad for shotgun cartridge as well as a cartridge able to substantially solve at least some of the cited drawbacks.

In the frame of said technical problem, it is an important object of the invention to make a wad for shotgun cartridges that does not cause environmental problems.

Another important object of this invention is to make a wad for shotgun cartridges having adequate mechanical behaviour.

The technical problem and the mentioned objects are attained by a wad for shotgun cartridges as recited in the annexed claim 1.

Preferred technical solutions are recited in the annexed dependant claims.

In the present documents, the measurements, the values, the forms and the geometrical references (such as perpendicularity and parallelism), when associated with words like "about" or other similar terms like "almost" or "substantially" are to be intended as unless errors of measurement or inaccuracies due to errors of production and/or manufacture, and above all unless a slight difference from the value, the measurement, the shape or geometrical reference associated. For example, these terms, when associated with a value, preferably mean a difference not higher than 10% of said value.

Moreover, when used, terms such as "first", "second", "higher", "lower", "main", "secondary", do not necessarily identify an order, a priority of relation or related position, but may be simply used to distinguish more clearly different components. Unless where specified otherwise, as it results from the following discussions, it is to be considered that terms such as "treatment", "informatics", "determination", "calculation" or the like, refer to the action and/or process of a computer or similar deice of electronic calculation handling and/or transforming data represented as physical quantities inside information systems, registers or other devices for storing, transmitting or showing information.

The measurements and data given in the present text are to be considered, unless otherwise indicated, as carried out in International Standard Atmosphere ICAO (ISO 2533:1975).

The hereinafter stated percentages are quantities by weight.

The wad for shotgun cartridges according to the invention has shapes and dimensions preferably known and described for instance in one or more patent specifications US 5452535 A, US 3724376 A, US 20090095187 A1, US 7810432 B2, US 8807040 B2 or even in other shapes.

Said wad is made by anhydrous polymeric material, namely without water or humidity.

With said hereinafter described material, other parts of the cartridge having several dimensions may be made, such as the outer envelope and/or the wad base and/or the dop for the case and/or the hunting case.

Said polymer may also comprise preferably starch, most preferably maize starch, preferably with an amount preferably between 35% and 65%, more preferably between 40% and 60% and still more preferably between 45% and 55%.

In view of the presence of starch, the polymer at least partially is of vegetal origin. The polymer also comprises preferably polyvinyl alcohol (PVA), preferably in an amount between 20% and 12 %, more preferably between 17% and 14%.

Most preferably, there are a first polyvinyl alcohol (PVA) with a hydrolysis degree between 78,5% and 80,5%, and a second polyvinyl alcohol (PVA) preferably with a hydrolysis degree between 70% and 74%.

Said first PVA is in a quantity preferably comprised between 5% and 12%, more preferably between 6% and 10% and still most preferably between 7% and 9%.

Said second PVA is in a quantity preferably comprised between 5% and 12%, more preferably between 6% and 10% and still most preferably between 7% and 9%.

Said polymer also comprises preferably glycerol, preferably in a quantity comprised between 5% and 30%, more preferably between 10% and 25%, more preferably between 15% and 20%, still most preferably between 17% and 19%.

Said polymer further comprises preferably calcium stearate, preferably in a quantity comprised between 0,5% and 5%, more preferably between 1% and 4%, and still most preferably between 1% and 3%.

Said polymer further comprises preferably pea fibres, preferably in an amount between 3% and 7%, more preferably between 4% and 6%, and still most preferably between 4% and 5%.

Said polymer further comprises preferably calcium carbonate, preferably in an amount comprised between 0,5% and 4%, most preferably between 1% and 3%.

Said polymer further comprises preferably elasticizing materials such as elastomers, for instance guar gum and/or xanthane gum, preferably in a total amount comprised between 0,1% and 4%, preferably between 0,3% and 1%. Said additives preferably comprise a blend of erucamide, guar and weed.

Said polymer further comprises preferably Additives, preferably in an amount comprised between 0,5 % and 4%, more preferably between 1% and 3%. Said additives preferably comprise a blend of erucamide and weed. A preferred example of mixture is the following:

| Component | Quantity by weight (%) |
|---|---|
| Starch | 50,00 |
| First PVA | 7,91 |
| Second PVA | 7,91 |
| Glycerol | 24,00 |
| Calcium stearate | 2,70 |
| Pea fibres | 4,50 |
| Calcium carbonate | 2,00 |
| Guar gum | 0,5 |
| Additives | remainder |

Said components are mixed with traditional methods, for instance with known blenders at a speed comprised between 100 rpm and 700 rpm and temperatures preferably comprised between 100°C and 150°C.

Said wads or even the cases may be made by extrusion methods with conventional extruders or by moulding methods at temperatures preferably comprised between 80°C and 110°C.

The wad is preferably made as a single piece.

The wad for shotgun cartridge according to the present invention attains important advantages.

Indeed, said wad resulted to be not only biodegradable with higher rapidity in comparison with the known biodegradable wads, but also to be edible.

The wild animals may then eat the wad without causing any health problems. Moreover, these wads are quickly decomposed either by rain or when immerged in brooks or puddles.

These wads have also a mechanical behaviour under deformation which is closer to rubber and are able to transmit the burst pressure as a gradual and progressive thrust to the lead shots.

The invention may undergo variations falling in the range of the inventive concept defined by the claims. In such a range any detail may be replaced by equivalent elements, so that the shapes and dimensions may be taken as non-limiting examples.

## Claims

1. Wad for shotgun cartridges, **characterized by** the fact of being made of an anhydrous polymeric material, said polymeric material comprising starch in an amount between 35% and 65% by weight, PVA in an amount between 12% and 20% by weight, pea fibres and said polymeric material consequently being edible and at least partially vegetable.

2. Wad according to claim 1, wherein said anhydrous polymeric material comprises a first PVA and a second PVA, said first PVA and said second PVA having a different hydrolysis rate.

3. Wad according to claim 2, wherein said first PVA has a hydrolysis rate between 78,5% and 80,5%, and said second PVA has a hydrolysis rate between 70% and 74%, respectively.

4. Wad according to claim 2 or 3, wherein the amount by weight of each said first PVA and said second PVA is comprised between 5% and 12%.

5. Wad according to any preceding claim, wherein said polymeric material comprises glycerol.

6. Wad according to any preceding claim, wherein said polymeric material comprises calcium stearate.

7. Wad according to any preceding claim, wherein said polymeric material comprises elastomers.

8. Wad according to any preceding claim, wherein said pea fibres are present in percentages between 3% and 7%.

9. Wad according to any preceding claim, **characterized by** the fact of being one-piece made.

10. Shotgun cartridge including a wad according to any of the preceding claims.

11. Shotgun cartridge and/or outer envelope of said cartridge and/or wad base of said cartridge and/or dop of said cartridge for shotgun cases, made of an anhydrous polymeric material according to any of claims 1-10.
